# EUROPÄISCHE PATENTSCHRIFT

(11) **EP 2 221 682 B1**
(45) Veröffentlichungstag und Bekanntmachung des Hinweises auf die Patenterteilung: **31.07.2013**
(21) Anmeldenummer: 09002332.6
(22) Anmeldetag: 19.02.2009
(51) Int. Cl.: G05B 19/042, G06F 9/44

(54) **Verfahren zur Bereitstellung von Funktionen in einem industriellen Automatisierungssystem, Steuerungsprogramm und industrielles Automatisierungssystem**
Method for preparing functions in an industrial automation system, control program and industrial automation system
Procédé de mise à disposition de fonctions dans un système industriel d'automatisation, programme de commande et système industriel d'automatisation

(43) Veröffentlichungstag der Anmeldung: 25.08.2010
(73) Patentinhaber: Siemens Aktiengesellschaft, 80333 München (DE)
(72) Erfinder: Dingfelder, Sabine, 91088 Bubenreuth (DE); Schneider, Dieter, 76744 Wörth (DE)

(56) Entgegenhaltungen:
- WO-A-2004/109415
- US-A1- 2004 221 005
- JAMMES F ET AL: "Service-Oriented Paradigms in Industrial Automation" IEEE TRANSACTIONS ON INDUSTRIAL INFORMATICS, IEEE SERVICE CENTER, NEW YORK, NY, US, Bd. 1, Nr. 1, 1. Februar 2005 (2005-02-01), Seiten 62-70, XP011128769 ISSN: 1551-3203
- MUSTAFA F ET AL: "Dynamic Web Service Composition" COMPUTER ENGINEERING AND TECHNOLOGY, 2009. ICCET '08. INTERNATIONAL CONFERENCE ON, IEEE, PISCATAWAY, NJ, USA, 22. Januar 2009 (2009-01-22), Seiten 463-467, XP031415236 ISBN: 978-1-4244-3334-6
- WANG N ET AL: "Total quality of service provisioning in middleware and applications" MICROPROCESSORS AND MICROSYSTEMS, IPC BUSINESS PRESS LTD. LONDON, GB, Bd. 27, Nr. 2, 15. März 2003 (2003-03-15), Seiten 45-54, XP004413102 ISSN: 0141-9331
- KO J M ET AL: "Quality-of-service oriented web service composition algorithm and planning architecture" JOURNAL OF SYSTEMS & SOFTWARE, ELSEVIER NORTH HOLLAND, NEW YORK, NY, US, Bd. 81, Nr. 11, 1. November 2008 (2008-11-01), Seiten 2079-2090, XP025432216 ISSN: 0164-1212 [gefunden am 2008-09-18]

## Beschreibung

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Bei verteilten Diensten, deren Dienstkomponenten durch mehrere unterschiedliche Rechnereinheiten zur Realisierung von Funktionen eines Automatisierungssystems bereitgestellt werden, bestehen hohe Anforderungen an eine Kommunikationsinfrastruktur des Automatisierungssystems. Zum einen sind üblicherweise Anforderungen nach einer echtzeitfähigen Kommunikation, die durch eine vergleichsweise hohe Zahl relativ kurzer Meldungen gekennzeichnet ist, zu erfüllen, andererseits sollen unterschiedliche Kommunikationsprotokolle für verteilte Dienste möglichst transparent nutzbar sein. Eine leistungsschwache Kommunikationsinfrastruktur kann eine fehlerfreie Bereitstellung eines Dienstes gefährden und sich nachteilig auf Systemstabilität und -verfügbarkeit auswirken.

Bei Zugriffen auf Diensten zugeordnete Daten und Meßwerte innerhalb eines industriellen Automatisierungssystems bestehen darüber hinaus oft höchst unterschiedliche Client-seitige Anforderungen hinsichtlich Verfügbarkeit bzw. Quality of Service sowie Datenfilterung bzw. Informationsvorverdichtung. Des weiteren bestehen Anforderung nach einer Erweiterbarkeit von bestehenden Diensten durch optionale bzw. zusätzliche Dienstkomponenten, ohne ein Daten- und Funktionsmodell, auf dem eine Implementierung eines bestehenden Dienstes basiert, substantiell ändern zu müssen. Diesen Anforderungen war bisher dadurch Rechnung getragen worden, daß innerhalb eines industriellen Automatisierungssystems Service-seitig im wesentlichen für sämtliche Dienste separate Realisierungen von Funktionen zur Sicherstellung einer definierten Dienstverfügbarkeit oder von Datenfiltern geschaffen worden sind. Im Hinblick auf eine effiziente Bereitstellung und Wartung genannter Funktionen ist dies äußerst nachteilig. Separate Einzellösungen sind auch in bezug auf ein konsistentes Systemverhalten bei verteilten Diensten problematisch.

Entsprechend bisherigen Ansätzen wird ein spezifischer Kommunikationsadapter vorgesehen, der einer individuellen Dienststeuerungseinheit zugeordnet und an diese angepaßt ist. Bei Änderungen von Komponenten eines durch die Dienststeuerungseinheit verwalteten Dienstes sind daher häufig weitreichende Anpassungsarbeiten am Kommunikationsadapter erforderlich.

Aus WO 2004/109415 A1 ist bekannt, Funktionen eines industriellen Automatisierungssystems durch Dienste bereit zu stellen und Funktionsblöcke in Standard-Funktionsblöcke und flexible Funktionsblöcke zu unterteilen. Dabei umfassen Eingangs- und Ausgangsparameter von Funktionsblöcken ein Wertefeld und ein Statusfeld, das wiederum Qualitäts-, Substatus- und Grenzwertattribute aufweist. Zur Konfigurationsunterstützung ist eine Schnittstelleneinrichtung vorgesehen.

Allgemeine Aspekte von Dienst-orientierten Architekturen (SOA) in Zusammenhang mit einer Verwendung standardisierter Kommunikationsprotokolle sind in F. James et al. "SERVICE-ORIENTED PARADIGMS IN INDUSTRIAL AUTOMATION", IEEE Transactions on Industrial Informatics, Vol. 1, No. 1, Februar 2005, ISSN 1551-3203, Seite 62-70 beschrieben. In F. Mustafa et al. "DYNAMIC WEB SERVICE COMPOSITION", 2009 International Conference on Computer Engineering and Technology, ICCET 2009, 22. Januar 2009, ISBN 978-1-4244-3334-6, Seite 463-467 ist Quality of Service (QoS) als Problemfeld im Kontext von Dienstorientierten Architekturen genannt. Eine Unterteilung von Dienstkomponenten in dienstspezifische und nicht-dienstspezifische Komponenten ist dort jedoch nicht behandelt. Aus US 2004/221005 A1 ist bekannt, daß Dienste dienstspezifische und nicht-dienstspezifische Komponenten umfassen können. Jedoch ist dort nicht beschrieben, daß QoS-Maßnahmen durch nicht-dienstspezifische Komponenten sicherzustellen sind.

Der vorliegenden Erfindung liegt die Aufgabe zugrunde, ein zuverlässiges und effizientes Verfahren zur Bereitstellung von Funktionen in einem Automatisierungssystem mit über ein Kommunikationsnetz gekoppelten Steuerungseinheiten zu schaffen sowie geeignete Vorrichtungen oder Mittel zur Durchführung des Verfahrens anzugeben.

Erfindungsgemäß wird diese Aufgabe durch ein Verfahren mit den in Anspruch 1 angegebenen Merkmalen, ein Steuerungsprogramm mit den in Anspruch 10 angegebenen Merkmalen und ein Automatisierungssystem mit den in Anspruch 11 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden Funktionen in einem industriellen Automatisierungssystem mit über ein Kommunikationsnetz gekoppelten Steuerungseinheiten durch Dienste verfügbar gemacht. Die Steuerungseinheiten sind vorzugsweise programmierbar. Ferner kann das Automatisierungssystem beispielsweise ein Fertigungs-, Prozeß- oder Gebäudeautomatisierungssystem sein.

Erfindungsgemäß werden Komponenten eines Dienstes in dienstspezifische Komponenten und in von mehreren unterschiedlichen Diensten wiederverwendbare nicht-dienstspezifische Komponenten aufgeteilt. Außerdem weisen dienstspezifische Komponenten und nicht-dienstspezifische Komponenten eine einheitliche Konfigurationsschnittstelle auf. Des weiteren werden Dienstkomponente über die einheitliche Konfigurationsschnittstelle durch eine Dienstkonfigurationseinheit zu einem Dienst verknüpft. Funktionen zur Überwachung und/oder Steuerung einer definierten Dienstgüte werden ausschließlich den nicht-dienstspezifischen Komponenten zugeordnet. Auf diese Weise werden Aufwände für eine Implementierung von Maßnahmen zur Sicherstellung einer definierten Dienstgüte (Quality of Service) deutlich reduziert und potentielle Fehlerquellen bei der Implementierung der Maßnahmen minimiert. Dies bewirkt auch verringerte Wartungsaufwände für Funktionen zur Überwachung bzw. Steuerung einer definierten Dienstgüte. Außerdem wird durch eine erfindungsgemäße systemweit einheitliche Behandlung von Maßnahmen zur Sicherstellung einer definierten Dienstgüte ein konsistentes Systemverhalten erzielt.

Vorzugsweise werden auch Funktionen zur Implementierung von Datenfiltern, mittels derer durch eine Client-Anwendung für diese relevante Nachrichten von ausgewählten Diensten selektiv empfangbar sind, den wiederverwendbaren Komponenten zugeordnet. Hieraus ergibt sich eine weitere Reduktion von Implementierungs- und wartungsaufwänden sowie potentieller Fehlerquellen. Außerdem ermöglicht eine systemweit einheitliche Service-seitige Bereitstellung von Datenfiltern eine deutliche Verringerung der Auslastung des Kommunikationsnetzes.

Darüber hinaus können die wiederverwendbaren Dienstkomponenten auch dieizstinterne Schnittstellen für einen Nachrichten- und/oder Datenzugriff durch weitere dienstspezifische Komponenten umfassen. Auf diese Weise können zusätzliche bzw. optionale dienstspezifische Komponenten einfach auch nachträglich in einen Dienst integriert werden und auf wiederverwendbare Funktionen zur Sicherstellung einer definierten Dienstgüte oder Datenfilter zurückgreifen, ohne daß eine Kommunikation über externe Dienstschnittstellen und Anpassungen an ein bestehendes internes Objektmodell eines Dienstes erforderlich sind. Entsprechend einer bevorzugten Ausführungsform der vorliegenden Erfindung weisen dienstspezifische Komponenten einheitliche Kommunikationsschnittstellen zu wiederverwendbaren Komponenten auf.

Dienste des Automatisierungssystems werden bevorzugt innerhalb einer dienstorientierten Architektur durch die Steuerungseinheiten bereitgestellt. Dienstorientierte bzw. serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Hieraus resultiert eine besonders sichere und flexible Bereitstellung einer Steuerungsinformation für ein rechnerbasiertes Objekt in einem Automatisierungssystem.

Das erfindungsgemäße Verfahren kann durch ein Steuerungsprogramm zur Bereitstellung von Funktionen in einem Automatisierungssystem implementiert werden. Das Steuerungsprogramm ist in einen Arbeitsspeicher einer Steuerungseinheit ladbar und weist zumindest einen Codeabschnitt auf, bei dessen Ausführung eine Durchführung vorangehend beschriebener Schritte des erfindungsgemäßen Verfahrens veranlaßt wird, wenn das Steuerungsprogramm in der Steuerungseinheit abläuft.

Das erfindungsgemäße Automatisierungssystem umfaßt mehrere über ein Kommunikationsnetz miteinander verbundener Steuerungseinheiten zur Bereitstellung von Funktionen des Automatisierungssystems als Dienste, deren Komponenten in dienstspezifische Komponenten und in von mehreren unterschiedlichen Diensten wiederverwendbare Komponenten aufgeteilt sind. Dabei weisen dienstspezifische Komponenten und wiederverwendbare Komponenten eine einheitliche Konfigurationsschnittstelle auf. Außerdem ist erfindungsgemäß zumindest eine Dienstkonfigurationseinheit zur Verknüpfung von Dienstkomponenten zu einem Dienst über die einheitliche Konfigurationsschnittstelle vorgesehen. Des weiteren umfaßt das Automatisierungssystem eine Steuerungseinheit zur Zuordnung von Funktionen zur Überwachung und/oder Steuerung einer definierten Dienstgüte zu den wiederverwendbaren Komponenten.

Die Erfindung wird nachfolgend an einem Ausführungsbeispiel anhand der Zeichnung näher erläutert. Es zeigt
- Figur 1: eine schematische Darstellung eines Automatisierungssystems mit mehreren über ein Kommunikationsnetz miteinander verbundenen Steuerungseinheiten,
- Figur 2: eine Detaildarstellung von Komponenten eines durch eine der in Figur 1 dargestellten Steuerungseinheiten bereitgestellten Dienstes.

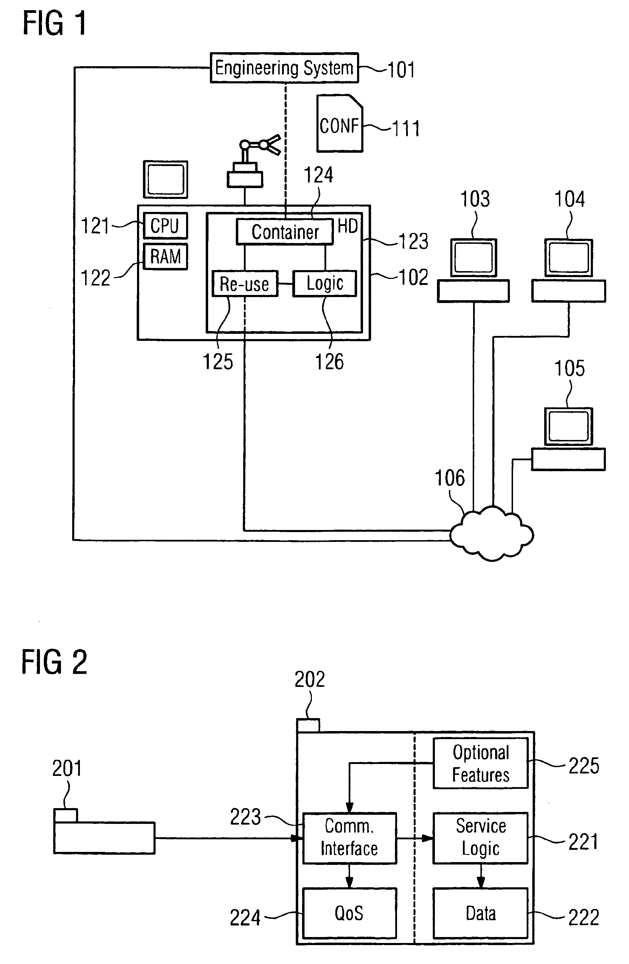

Das in Figur 1 dargestellte industrielle Automatisierungssystem umfaßt ein Engineering-System 101 und mehrere programmierbare Steuerungseinheiten 102-105, die als Netzknoten über ein Kommunikationsnetz 106 miteinander verbunden sind. Die Steuerungseinheiten 102-105 stellen Funktionen des Automatisierungssystems als lokale Dienste bereit, die mittels Konfigurationsdaten konfiguriert und aktiviert werden.

Das Engineering-System 101 dient zur Konfiguration, Wartung, Inbetriebnahme und Dokumentation des Automatisierungssystems und stellt Konfigurationsdaten 111 bereit. Die Konfigurationsdaten 111 umfassen Informationen zur Zuordnung von Diensten zu Steuerungseinheiten 102-105 sowie zu Abhängigkeiten zwischen Diensten und werden durch das Engineering-System 101 für den Steuerungseinheiten 102-105 zugeordnete Dienstkonfigurationseinheiten verfügbar gemacht. Durch die Dienstkonfigurationseinheiten werden die Konfigurationsdaten dann über eine Konfigurationsschnittstelle zu dienstspezifischen oder wiederverwendbaren Komponenten von lokalen Diensten übermittelt. Eine Initialisierung einer dienstspezifischen oder wiederverwendbaren Komponente erfolgt durch Laden der übermittelten Konfigurationsdaten bei Start der jeweiligen dienstspezifischen oder wiederverwendbaren Komponente. Vorteilhafterweise erfolgt zuerst eine Aktivierung einer dienstspezifischen Komponente und dann eine Aktivierung einer abhängigen wiederverwendbaren Komponente bei einem Aufruf der dienstspezifischen Komponente durch die wiederverwendbare Komponente.

Dienstspezifische Komponenten und wiederverwendbare Komponenten weisen eine einheitliche Konfigurationsschnittstelle auf. Über die einheitliche Konfigurationsschnittstelle werden Dienstkomponenten durch die jeweilige Dienstkonfigurationseinheit zu einem Dienst verknüpft.

Eine Bereitstellung von Funktionen in einem industriellen Automatisierungssystem wird nachfolgend beispielhaft für eine Steuerungseinheit 102 beschrieben und ist in entsprechender Weise auch auf die übrigen Steuerungseinheiten 103-105 übertragbar. Die Steuerungseinheit 102 umfaßt einen Prozessor 121, einen Arbeitsspeicher 122 und eine Festplatte 123 zur nichtflüchtigen Speicherung von Programmcode, Anwendungsdaten und Benutzerdaten. Auf der Festplatte 123 der Steuerungseinheit 102 ist Programmcode 124 zur Bereitstellung eines lokalen Dienstes gespeichert. Der lokale Dienst dient im vorliegenden Ausführungsbeispiel beispielsweise zur Ansteuerung meßtechnischer oder aktorischer Peripherie, wie Sensoren oder Roboter. Der auf der Festplatte 123 gespeicherte Programmcode ist in den Arbeitsspeicher 122 der ersten Rechnereinheit 102 ladbar und durch den Prozessor 121 zur Bereitstellung des lokalen Dienstes ausführbar. Der Code zur Bereitstellung des lokalen Dienstes umfaßt Code 124 zur Implementierung einer Dienstkonfigurationseinheit sowie Code 125, 126 zur Realisierung einer dienstspezifischen Komponente bzw. einer von mehreren unterschiedlichen Diensten wiederverwendbaren Komponente, in welche der lokale Dienst aufgeteilt ist.

Entsprechend der Detaildarstellung von Komponenten des durch die Steuerungseinheit 102 bereitgestellten lokalen Dienstes 202 in Figur 2 erfolgt innerhalb einer Service-orientierten Architektur eine Unterteilung von Funktionen, die
a) die spezifisch für einen ausgewählten Dienst sind oder
b) von mehreren oder allen lokalen Diensten genutzt bzw. bereitgestellt werden und nicht dienstspezifisch sind.

Dienstspezifische Funktionen werden im vorliegenden Ausführungsbeispiel durch eine den lokalen Dienst 202 logisch implementierende Komponente 221 und eine Komponente 222 bereitgestellt, welche ein Objektmodell des lokalen Dienstes 202 und Objektmodell-spezifische Daten verwaltet.

Von mehreren unterschiedlichen lokalen Diensten wiederverwendbare Funktionen werden durch eine Komponente 223 zur Bereitstellung einer Kommunikationsschnittstelle zu einer Client-Anwendung 201 sowie durch eine Komponente 224 zur Steuerung und Überwachung einer definierten Dienstgüte implementiert. Die Komponente 223 zur Bereitstellung der Kommunikationsschnittstelle umfaßt auch Funktionen zur Implementierung von Datenfiltern, mittels derer durch die Client-Anwendung 201 relevante Nachrichten von ausgewählten Diensten abonniert werden können. Des weiteren wird durch diese Komponente auch eine dienstinterne Schnittstelle für einen Nachrichten- bzw. Datenzugriff durch eine weitere dienstspezifische Komponente 225 bereitgestellt, die optionale Funktionen des lokalen Dienstes 202 realisiert. Die weitere dienstspezifische Komponente 225 kann damit wiederverwendbare Funktionen nutzen, ohne daß eine Kommunikation über eine externe Dienstschnittstelle erforderlich ist. Vorzugsweise sollten Funktionen, die von einem internen Objektmodell eines Dienstes abhängig sind, dienstspezifischen Komponenten zugeordnet werden.

Die Anwendung der vorliegenden Erfindung ist nicht auf das beschriebene Ausführungsbeispiel beschränkt.

## Patentansprüche

1. Verfahren zur Bereitstellung von Funktionen in einem industriellen Automatisierungssystem mit über ein Kommunikationsnetz gekoppelten Steuerungseinheiten, bei dem
- Funktionen des Automatisierungssystems durch Dienste verfügbar gemacht werden,
- Komponenten eines Dienstes in dienstspezifische Komponenten und nicht-dienstspezifische Komponenten, die in von mehreren unterschiedlichen Diensten verwendbar sind, aufgeteilt werden,
- dienstspezifische Komponenten und nicht-dienstspezifische Komponenten eine einheitliche Konfigurationsschnittstelle aufweisen,
- Dienstkomponenten über die einheitliche Konfigurationsschnittstelle durch eine Dienstkonfigurationseinheit zu einem Dienst verknüpft werden,
- Funktionen zur Überwachung und/oder Steuerung einer definierten Dienstgüte ausschließlich den nicht-dienstspezifischen Komponenten zugeordnet werden, wodurch eine systemweit einheitliche Behandlung von Maßnahmen zur sicherstellung einer definierten Dienstgüte erfolgt.

2. Verfahren nach Anspruch 1,
bei dem Funktionen zur Implementierung von Datenfiltern, mittels derer durch eine Client-Anwendung für diese relevante Nachrichten von ausgewählten Diensten abonniert werden können, den nicht-dienstspezifischen Komponenten zugeordnet werden.

3. Verfahren nach einem der Ansprüche 1 oder 2,
bei dem die nicht-dienstspezifischen Dienstkomponenten auch dienstinterne Schnittstellen für einen Nachrichten- und/oder Datenzugriff durch weitere dienstspezifische Komponenten umfassen.

4. Verfahren nach einem der Ansprüche 1 bis 3,
bei dem dienstspezifische Komponenten einheitliche Kommunikationsschnittstellen zu nicht-dienstspezifischen Komponenten aufweisen.

5. Verfahren nach einem der Ansprüche 1 bis 4,
bei dem Konfigurationsdaten durch eine Dienstkonfigurationseinheit über eine Konfigurationsschnittstelle zu einer dienstspezifischen und/oder nicht-dienstspezifischen Komponente übermittelt werden, und bei dem eine Initialisierung einer dienstspezifischen und/oder nicht-dienstspezifischen Komponente durch Laden der übermittelten Konfigurationsdaten bei Start der dienstspezifischen und/oder nicht-dienstspezifischen Komponente erfolgt.

6. Verfahren nach Anspruch 5,
bei dem zuerst eine Aktivierung einer dienstspezifischen Komponente und dann eine Aktivierung einer abhängigen nicht-dienstspezifischen Komponente bei einem Aufruf der dienstspezifischen Komponente durch die nicht-dienstspezifische Komponente erfolgt.

7. Verfahren nach einem der Ansprüche 5 oder 6,
bei dem Konfigurationsdaten durch ein Engineering-System zur Konfiguration, Wartung, Inbetriebnahme und/oder Dokumentation des Automatisierungssystems für eine Dienstkonfigurationseinheit verfügbar gemacht werden.

8. Verfahren nach einem der Ansprüche 1 bis 7,
bei dem Dienste des Automatisierungssystems innerhalb einer dienstorientierten Architektur durch die Steuerungseinheiten bereitgestellt werden.

9. Verfahren nach einem der Ansprüche 1 bis 8,
bei dem das Automatisierungssystem ist ein Fertigungs-, Prozeß- oder Gebäudeautomatisierungssystem ist.

10. Steuerungsprogramm zur Bereitstellung von Funktionen in einem Automatisierungssystem, das in einen Arbeitsspeicher einer Steuerungseinheit ladbar ist und zumindest einen Codeabschnitt aufweist, bei dessen Ausführung
- eine Verknüpfung von Dienstkomponenten zu einem Dienst über eine einheitliche Konfigurationsschnittstelle durch eine Dienstkonfigurationseinheit veranlaßt wird, wobei Funktionen des Automatisierungssystems durch Dienste verfügbar gemacht werden, Komponenten eines Dienstes in dienstspezifische Komponenten und nicht-dienstspezifische Komponenten, die in von mehreren unterschiedlichen Diensten verwendbar sind, aufgeteilt sind und dienstspezifische Komponenten und nicht-dienstspezifische Komponenten eine einheitliche Konfiguratiohsschnittstelle aufweisen,
- eine Zuordnung von Funktionen zur Überwachung und/oder Steuerung einer definierten Dienstgüte ausschließlich zu den nicht-dienstspezifischen Komponenten veranlaßt wird, wenn das Steuerungsprogramm in der Steuerungseinheit abläuft.

11. Industrielles Automatisierungssystem mit
- mehreren über ein Kommunikationsnetz miteinander verbundenen Steuerungseinheiten zur Bereitstellung von Funktionen des Automatisierungssystems als Dienste, deren Komponenten in dienstspezifische Komponenten und nicht-dienstspezifische Komponenten, die in von mehreren unterschiedlichen Diensten verwendbar sind, aufgeteilt sind, wobei dienstspezifische Komponenten und nicht-dienstspezifische Komponenten eine einheitliche Konfigurationsschnittstelle aufweisen,
- zumindest einer Dienstkonfigurationseinheit zur Verknüpfung von Dienstkomponenten zu einem Dienst über die einheitliche Konfigurationsschnittstelle,
- einer steuerungseinheit zur zuordnung von Funktionen zur Überwachung und/oder Steuerung einer definierten Dienstgüte ausschließlich zu den nicht-dienstspezifischen Komponenten.

## Claims

1. Method for providing functions in an industrial automation system having control units which are coupled via a communication network, in which
- functions of the automation system are made available by services,
- components of a service are subdivided into service-specific components and non-service-specific components which can be used by a plurality of different services,
- service-specific components and non-service-specific components have a standard configuration interface,
- service components are linked to a service by a service configuration unit via the standard configuration interface,
- functions for monitoring and/or controlling a defined quality of service are assigned solely to the non-service-specific components as a result of which measures for ensuring a defined quality of service are handled in a standard manner throughout the system.

2. Method according to Claim 1,
in which functions for implementing data filters, which can be used by a client application to subscribe to messages from selected services which are relevant to said application, are assigned to the non-service-specific components.

3. Method according to either of Claims 1 and 2,
in which the non-service-specific service components also comprise service-internal interfaces for message and/or data access by further service-specific components.

4. Method according to one of Claims 1 to 3,
in which service-specific components have standard communication interfaces to non-service-specific components.

5. Method according to one of Claims 1 to 4,
in which a service configuration unit transmits configuration data to a service-specific component and/or a non-service-specific component via a configuration interface, and in which a service-specific component and/or a non-service-specific component is/are initialized by loading the transmitted configuration data when starting the service-specific component and/or the non-service-specific component.

6. Method according to Claim 5,
in which a service-specific component is activated first and a dependent non-service-specific component is then activated when the service-specific component is called by the non-service-specific component.

7. Method according to either of claims 5 and 6,
in which configuration data are made available to a service configuration unit by an engineering system for configuring, maintaining, starting up and/or documenting the automation system.

8. Method according to one of Claims 1 to 7,
in which services of the automation system are provided by the control units within a service-oriented architecture.

9. Method according to one of Claims 1 to 8,
in which the automation system is a production, process or building automation system.

10. Control program for providing functions in an automation system, which program can be loaded into a main memory of a control unit and has at least one code section whose execution
- causes service components to be linked to a service by a service configuration unit via a standard configuration interface, functions of the automation system being made available by services, components of a service having been subdivided into service-specific components and non-service-specific components which can be used by a plurality of different services, and service-specific components and non-service-specific components having a standard configuration interface,
- causes functions for monitoring and/or controlling a defined quality of service to be assigned solely to the non-service-specific components,
if the control program is executed in the control unit.

11. Industrial automation system having
- a plurality of control units which are connected to one another via a communication network and are intended to provide functions of the automation system in the form of services whose components have been subdivided into service-specific components and non-service-specific components which can be used by a plurality of different services, service-specific components and non-service-specific components having a standard configuration interface,
- at least one service configuration unit for linking service components to a service via the standard configuration interface,
- a control unit for assigning functions for monitoring and/or controlling a defined quality of service solely to the non-service-specific components.

## Revendications

1. Procédé de mise à disposition de fonctions dans un système d'automatisation industriel ayant des unités de commande couplées par l'intermédiaire d'un réseau de communication, dans lequel
- on rend disponible des fonctions du système d'automatisation par des services,
- on subdivise des composants d'un service en des composants spécifiques à un service et en des composants non spécifiques à un service, qui peuvent être appliqués par plusieurs services différents,
- des composants spécifiques à un service et des composants non spécifiques à un service ont une interface de configuration unitaire,
- des composants de service sont combinés en un service par une unité de configuration de service par l'intermédiaire de l'interface de configuration unitaire,
- des fonctions de contrôle et/ou de commande d'une qualité de service définie sont associées exclusivement aux composants non spécifiques à un service, ce qui donne un traitement unitaire étendu à tout le système de mesures pour assurer une qualité de service définie.

2. Procédé suivant la revendication 1,
dans lequel les fonctions de mise en oeuvre de filtres de données, au moyen desquelles on peut s'abonner par une application client à des messages, pertinents pour celle-ci, de services sélectionnés, sont associées aux composants non spécifiques à un service.

3. Procédé suivant l'une des revendications 1 ou 2,
dans lequel les composants non spécifiques à un service comprennent aussi des interfaces internes au service pour un accès à des données et/ou à des messages par d'autres composants spécifiques à un service.

4. Procédé suivant l'une des revendications 1 à 3,
dans lequel les composants spécifiques à un service ont des interfaces de communication unitaires avec des composants non spécifiques à un service.

5. Procédé suivant l'une des revendications 1 à 4,
dans lequel des données de configuration sont transmises par une unité de configuration de service, par l'intermédiaire d'une interface de configuration, à un composant spécifique à un service et/ou à un composant non spécifique à un service, et dans lequel une initialisation d'un composant spécifique à un service et/ou d'un composant non spécifique à un service s'effectue par chargement des données de configuration transmises lors du lancement du composant spécifique à un service et/ou du composant non spécifique à un service.

6. Procédé suivant la revendication 5,
dans lequel on effectue d'abord une activation d'un composant spécifique à un service et ensuite une activation d'un composant dépendant non spécifique à un service lors d'un appel du composant spécifique à un service par le composant non spécifique à un service.

7. Procédé suivant l'une des revendications 5 ou 6,
dans lequel on rend disponible, à une unité de configuration de service, les données de configuration par un système d'engineering pour la configuration, l'entretien, la mise en fonctionnement et/ou la documentation du système d'automatisation.

8. Procédé suivant l'une des revendications 1 à 7,
dans lequel des services du système d'automatisation sont mis à disposition dans une architecture à orientation service par les unités de commande.

9. Procédé suivant l'une des revendications 1 à 8,
dans lequel le système d'automatisation est un système d'automatisation de fabrication, de process ou de bâtiment.

10. Programme de commande pour la mise à disposition de fonctions dans un système d'automatisation, qui peut être chargé dans une mémoire de travail d'une unité de commande et qui a au moins une partie de code, dans la réalisation duquel
- une combinaison de composants de service à un service est provoquée par une unité de configuration de service par l'intermédiaire d'une interface de configuration unitaire, des fonctions du système d'automatisation étant rendues disponibles par des services, des composants d'un service étant subdivisés en des composants spécifiques à un service et en des composants non spécifiques à un service, qui peuvent être utilisés dans plusieurs services différents et des composants spécifiques à un service et des composants non spécifiques à un service ayant une interface de communication unitaire,
- une association de fonctions pour le contrôle et/ou la commande d'une qualité de service définie est provoquée exclusivement pour les composants non spécifiques à un service,
lorsque le programme de commande se déroule dans l'unité de commande.

11. Système d'automatisation industriel comprenant
- plusieurs unités de commande, qui sont reliées entre elles par un réseau de communication et qui sont destinées à la mise à disposition de fonctions du système d'automatisation comme services, dont des composants sont répartis en des composants spécifiques à un service et en des composants non spécifiques à un service, qui peuvent être utilisés dans plusieurs services différents, des composants spécifiques à un service et des composants non spécifiques à un service ayant une interface de configuration unitaire,
- au moins une unité de configuration pour la combinaison de composants de service à un service par l'intermédiaire de l'interface de configuration unitaire,
- une unité de commande pour l'association de fonction pour le contrôle et/ou la commande d'une qualité de service définie exclusivement pour les composants non spécifiques à un service.
